# EUROPÄISCHE PATENTSCHRIFT

(11) **EP 3 056 370 B1**
(45) Veröffentlichungstag und Bekanntmachung des Hinweises auf die Patenterteilung: **13.09.2017**
(21) Anmeldenummer: 16153436.7
(22) Anmeldetag: 29.01.2016
(51) Int. Cl.: B60K 13/04

(54) **ABSTÜTZEINHEIT ZUR ABSTÜTZUNG EINER ABGASANLAGE EINES FAHRZEUGS**
SUPPORT ASSEMBLY FOR SUPPORTING AN EXHAUST GAS SYSTEM OF A VEHICLE
ENSEMBLE SUPPORT D'INSTALLATION DE GAZ D'ECHAPPEMENT DE VEHICULE AUTOMOBILE

(30) Priorität: 10.02.2015 DE 102015101845
(43) Veröffentlichungstag der Anmeldung: 17.08.2016
(73) Patentinhaber: Eberspächer Exhaust Technology GmbH & Co. KG, 66539 Neunkirchen (DE)
(72) Erfinder: Spieth, Arnulf, 73269 Hochdorf (DE)
(74) Vertreter: RLTG

(56) Entgegenhaltungen:
- DE-A1- 10 346 704
- DE-A1-102006 010 973
- DE-A1-102008 055 928
- FR-A1- 2 601 738

## Beschreibung

Die vorliegende Erfindung betrifft eine Abstützeinheit, mit welcher eine die Abgase von einer Brennkraftmaschine eines Fahrzeugs weg führende Abgasanlage abgestützt werden kann.

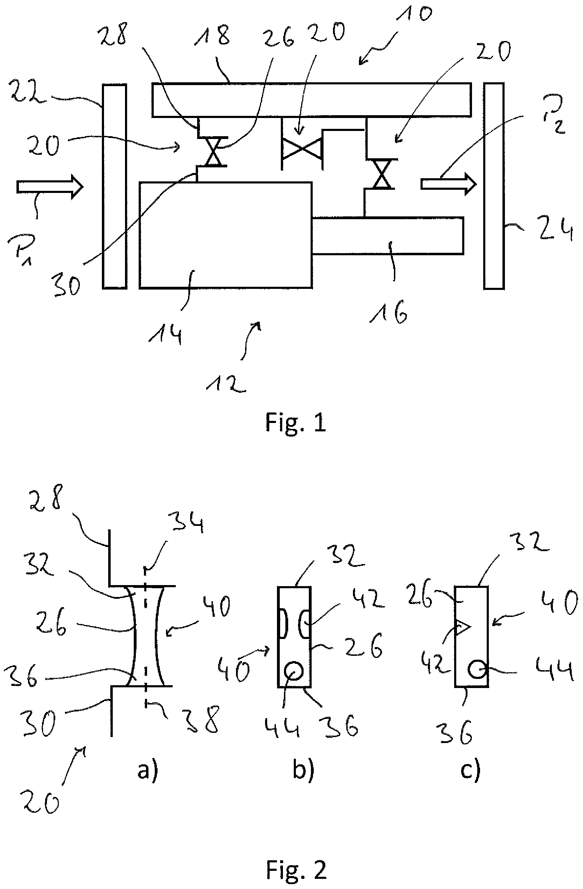

Die Fig. 1 zeigt in prinzipartiger Darstellung ein Antriebssystem 10 eines Fahrzeugs. Das Antriebssystem 10 umfasst eine Antriebseinheit 12 mit einer Brennkraftmaschine 14 und einem mit der Brennkraftmaschine 14 gekoppelten Getriebe 16. Die im Verbrennungsbetrieb der Brennkraftmaschine 14 generierten Verbrennungsabgase werden durch eine allgemein mit 18 bezeichnete Abgasanlage von der Brennkraftmaschine 14 weg geführt. Die Abgasanlage 18 kann einen beispielsweise an die Brennkraftmaschine 14 angeschlossenen Abgaskrümmer umfassen bzw. über diesen an die Brennkraftmaschine 14 angebunden sein.

Insbesondere bei Frontmotorfahrzeugen ist die Antriebseinheit 12 zusammen mit der bzw. einem Teil der Abgasanlage 18 in Fahrtrichtung vor einer den Fahrzeuginnenraum vom Motorraum trennenden Stirnwand 24 angeordnet. Die Abgasanlage 18 ist im vorderen Bereich eines Fahrzeugs durch mehrere Abstützeinheiten 20 bezüglich der Antriebseinheit 12 und somit bezüglich des verbleibenden Fahrzeugs abgestützt, d. h. daran getragen. Auch können verschiedene Bereiche der Abgasanlage 18 selbst durch eine oder mehrere derartige Abstützeinheiten 20 bezüglich einander abgestützt sein, um eine Versteifung bzw. eine erhöhte Stabilität in der Abgasanlage 18 selbst zu erreichen. Die Abgasanlage 18 kann dabei beispielsweise mehrere zum Teil auch gekrümmt verlaufende Abgasrohre bzw. einen Katalysatorbereich oder/und Schalldämpferbereich und dergleichen umfassen.

Bei einem Aufprall eines Hindernisses 22 in Richtung eines Pfeils P₁ auf ein Fahrzeug, insbesondere den Frontbereich eines Fahrzeugs, beaufschlagt das Hindernis 22 die Antriebseinheit 12 und verlagert diese in Richtung auf die Stirnwand 24 zu. Aufgrund der starren Kopplung der Abgasanlage 18 mit der Antriebseinheit 12 über die Abstützeinheiten 20 verlagert sich auch die Abgasanlage 18, insbesondere der im Motorraum angeordnete Bereich derselben, in Richtung eines Pfeils P₂ auf die Stirnwand 24 zu. Da die im Allgemeinen eingesetzten Abstützeinheiten 20 aus Stahlblechmaterial aufgebaut sind, besteht grundsätzlich die Gefahr, dass die von der Antriebseinheit 12 in Richtung auf die Stirnwand 24 zu mitgenommene Abgasanlage 18 in die Stirnwand 24 eindringt bzw. diese durchdringt und somit erhebliche Schäden und Verletzungen im Fahrzeuginnenraum auslösen kann.

Aus der FR-A 2 601 738 ist eine Abstützeinheit gemäß dem Oberbegriff des Anspruchs 1 bekannt. Diese bekannte Abstützeinheit umfasst ein aus Aluminium-Druckgussmaterial aufgebautes Abstützelement, das einerseits durch einen Bolzen bezüglich eines Motors festgelegt wird und andererseits über zwei elastische Einsatzelemente bezüglich einer Abgasanlage festgelegt wird. Auf diese Art und Weise wird eine elastische Verbindung zwischen der Abgasanlage und dem Motor realisiert, so dass im Übertragungsweg zwischen dem Motor und der Abgasanlage Vibrationen absorbiert werden. Ebenso offenbart die DE 10 2006 010973 A1 eine Abstützeinheit gemäß dem Oberbegriff des Anspruchs 1.

Es ist die Aufgabe der vorliegenden Erfindung, eine Abstützeinheit zur Abstützung einer Abgasanlage eines Fahrzeugs vorzusehen, mit welcher eine erhöhte Sicherheit für die in einem Fahrzeug sich befindenden Personen im Falle eines Aufpralls erreicht werden kann.

Erfindungsgemäß wird diese Aufgabe gelöst durch eine Abstützeinheit zur Abstützung einer Abgasanlage eines Fahrzeugs, umfassend wenigstens ein mit Leichtmetalldruckgussmaterial aufgebautes Abstützelement.

Das für eine erfindungsgemäß aufgebaute Abstützeinheit eingesetzte Leichtmetalldruckgussmaterial weist zwar eine sehr hohe Zugfestigkeit auf und ist somit geeignet, eine sehr stabile Verbindung zwischen einer Abgasanlage und beispielsweise einer Antriebseinheit eines Fahrzeugs herzustellen. Aufgrund der Sprödheit dieses Materials ist die zum Zerstören eines so aufgebauten Abstützelements erforderliche Schlagarbeit jedoch deutlich geringer, als beispielsweise bei einem aus Stahl oder Stahlblechmaterial aufgebauten Abstützelement. Dies bedeutet, dass bei einem Aufprall aufgrund der leichten Zerstörbarkeit eines erfindungsgemäß aufgebauten Abstützelements die Abgasanlage von dem diese tragenden Systembereich, also beispielsweise einer Antriebseinheit, leicht entkoppelt werden kann und somit die Gefahr, dass die Abgasanlage zusammen mit der Antriebseinheit bzw. durch die Antriebseinheit in den Fahrgastinnenraum hinein bewegt wird, deutlich gemindert ist.

Um im Falle eines Aufpralls bei einer erfindungsgemäßen Abstützeinheit die Zerstörung derselben noch besser definiert herbeiführen zu können, ist ferner vorgesehen, dass wenigstens ein Abstützelement wenigstens einen Sollbruchstellenbereich aufweist, wobei das wenigstens eine Abstützelement zum Bereitstellen einer Querschnittseinschnürung mit rotationssymmetrischer konkaver Ausgestaltung ausgebildet ist, so dass in einem Längenmittenbereich des wenigstens einen Abstützelements eine einen Sollbruchstellenbereich bereitstellende maximale Durchmesserverringerung vorhanden ist

Bei einer erfindungsgemäßen Abstützeinheit kann das Leichtmetalldruckgussmaterial Al oder/und Mg bzw. Si oder/und Cu oder/und Zn enthalten. Besonders vorteilhafterweise kann das Leichtmetalldruckgussmaterial eine Al/Si-Legierung oder eine Al/Mg-Legierung oder eine Al/Si/Mg-Legierung oder eine Al/Si/Cu-Legierung sein.

Um die erfindungsgemäße Abstützeinheit bzw. das mit Leichtmetalldruckgussmaterial aufgebaute Abstützelement derselben mit verschiedenen Systembereichen, also beispielsweise einer Abgasanlage einerseits bzw. einer Antriebseinheit oder dergleichen eines Fahrzeugs andererseits in einfacher Weise koppeln zu können, können ein zur festen Anbindung an einen ersten Systembereich vorgesehenes und mit wenigstens einem Abstützelement in einem ersten Kopplungsbereich gekoppeltes oder zu koppelndes erstes Anbindungselement und ein zur festen Anbindung an einen zweiten Systembereich vorgesehenes und mit wenigstens einem Abstützelement in einem zweiten Kopplungsbereich gekoppeltes oder zu koppelndes zweites Anbindungselement vorgesehen sein. Um dabei eine stabile Ankopplung des Abstützelements an die Anbindungselemente erreichen zu können, wird vorgeschlagen, dass das erste Anbindungselement mit dem Abstützelement in dem ersten Kopplungsbereich durch wenigstens ein Kopplungsorgan gekoppelt oder koppelbar ist oder/und dass das zweite Anbindungselement mit dem Abstützelement in dem zweiten Kopplungsbereich durch wenigstens ein Kopplungsorgan gekoppelt oder koppelbar ist, wobei vorzugsweise wenigstens ein Kopplungsorgan als Schraubbolzen ausgeführt sein kann.

Um einen derartigen Sollbruchstellenbereich in einfacher Weise bereitstellen zu können, wird ferner vorgeschlagen, dass wenigstens ein Sollbruchstellenbereich eine Vertiefung oder/und eine das Abstützelement durchsetzende Öffnung umfasst.

Die Erfindung betrifft ferner ein Antriebssystem für ein Fahrzeug, umfassend eine Antriebseinheit mit einer Brennkraftmaschine und eine Verbrennungsabgase von der Brennkraftmaschine weg führende Abgasanlage, ferner umfassend wenigstens eine Abstützeinheit mit dem vorangehend beschriebenen Aufbau.

Dabei kann beispielsweise vorgesehen sein, dass wenigstens eine Abstützeinheit zur Abstützung der Abgasanlage bezüglich der Brennkraftmaschine angeordnet ist, oder/und dass die Antriebseinheit ein Getriebe umfasst und wenigstens eine Abstützeinheit zur Abstützung der Abgasanlage bezüglich des Getriebes angeordnet ist, oder/und dass wenigstens eine Abstützeinheit zur Abstützung eines ersten Bereichs der Abgasanlage bezüglich eines zweiten Bereichs der Abgasanlage angeordnet ist.

Die vorliegende Erfindung wird nachfolgend mit Bezug auf die beiliegenden Figuren detailliert beschrieben. Es zeigt:
- Fig. 1: in prinzipieller Darstellung ein Antriebssystem für ein Fahrzeug;
- Fig. 2: in ihren Darstellungen a) bis c) verschiedene Ausgestaltungsformen einer Abstützeinheit bzw. eines Abstützelements dafür.

Ein Antriebssystem, in welchem eine erfindungsgemäße Abstützeinheit zum Einsatz kommen kann, um eine Abgasanlage bezüglich einer Antriebseinheit, also beispielsweise einer Brennkraftmaschine bzw. eines Getriebes, abzustützen, oder um verschiedene Bereiche in der Abgasanlage selbst aneinander abzustützen, ist in Fig. 1 in prinzipartiger Darstellung gezeigt. Insofern kann hinsichtlich des grundsätzlichen Aufbaus eines derartigen Antriebssystems auf die voranstehenden Ausführungen zur Fig. 1 verwiesen werden.

In Fig. 2a) ist ein Beispiel einer Abstützeinheit 20 dargestellt, die bei dem Antriebssystem 10 der Fig. 1 eingesetzt werden kann. Die Abstützeinheit 20 umfasst ein Abstützelement 26, welches mit einem ersten Anbindungselement 28 und einem zweiten Anbindungselement 30 fest gekoppelt ist. Die beiden Anbindungselemente 28, 30 können beispielsweise, so wie in den Figuren dargestellt, winkelartig ausgebildet sein, können aber auch jede andere geometrische Gestaltung aufweisen. Sie sind vorzugsweise aus Stahl bzw. Stahlblechmaterial aufgebaut. Das Anbindungselement 28 kann beispielsweise an die Abgasanlage 18 als erster Systembereich angebunden sein, während das Anbindungselement 30 beispielsweise an die Brennkraftmaschine 14 oder das Getriebe 16 als zweiter Systembereich angebunden sein kann. Diese Anbindung kann beispielsweise materialschlüssig, also beispielsweise durch Anschweißen, erfolgen, kann aber auch durch Anschrauben oder/und Anklemmen erfolgen.

Das Abstützelement 26 kann eine beispielsweise langgestreckte Konfiguration mit einem ersten Kopplungsbereich 32 aufweisen, in welchem das erste Anbindungselement 28 unter Einsatz eines ersten Kopplungsorgans 34 an das Abstützelement 26 angebunden ist. Beispielsweise kann das erste Kopplungsorgan 34 einen Schraubbolzen umfassen, welcher durch das erste Anbindungselement 28 hindurch in eine Gewindeöffnung im ersten Kopplungsbereich 32 des Abstützelements 26 eingeschraubt werden kann.

In einem zweiten Kopplungsbereich 36 ist das Abstützelement 26 mit dem zweiten Anbindungselement 32 durch ein zweites Kopplungsorgan 38 fest verbunden. Auch das zweite Kopplungsorgan 38 kann beispielsweise als Schraubbolzen ausgebildet und durch das zweite Anbindungselement 30 hindurch in den zweiten Kopplungsbereich 36 des Abstützelements 26 eingeschraubt sein.

Das Abstützelement 26 ist bei der erfindungsgemäßen Ausgestaltung einer Abstützeinheit 20 aus Leichtmetalldruckgussmaterial aufgebaut. Dabei kann das Abstützelement 26 mit Aluminium (Al) oder/und Magnesium (Mg) oder Legierungen davon aufgebaut sein. Insbesondere können folgende Legierungen zum Einsatz gelangen: AlSi9Cu3, AlMg3, AlMg5, AlMg9, AlSi10Mg, ALSi12Cu1, AlSi12. Der substantielle Vorteil des Einsatzes von Leichtmetalldruckgussmaterial zum Aufbau des Abstützelements 26 liegt darin, dass dieses Aufbaumaterial eine Zugfestigkeit aufweist, welche grundsätzlich mit derjenigen vom Stahlmaterial vergleichbar ist, so dass im normalen Betrieb eine stabile Abstützung bzw. Halterung der Abgasanlage am Fahrzeug, insbesondere der Antriebseinheit 10, gewährleistet ist. Aufgrund seiner Sprödheit zerbricht jedoch das Leichtmetalldruckgussmaterial bei schlagartiger Beaufschlagung wesentlich leichter, als Stahlmaterial. Insbesondere ist die zum Zerstören eines Abstützelements 26 aus Leichtmetalldruckgussmaterial erforderliche Schlagarbeit um einen Faktor 4 bis 5 geringer, als bei aus Stahlmaterial aufgebauten Abstützelementen. Aufgrund dieser vergleichsweise leichten Zerstörbarkeit bei Schlagbelastung wird insbesondere bei einem Frontalaufprall durch die Zerstörung der die Abgasanlage 18 an die Antriebseinheit 12 ankoppelnden Abstützelemente 26 der in Fig. 1 auch erkennbaren Abstützeinheiten 20 die Abgasanlage 18 weitestgehend von der Antriebseinheit 12 losgelöst. Lediglich im Bereich der direkten Anbindung der Abgasanlage an die Brennkraftmaschine 14 vermittels des Abgaskrümmers bleibt eine Kopplung bestehen. Aufgrund der gekrümmten Ausgestaltung des Abgaskrümmers ist dieser jedoch vergleichsweise leicht zu verformen. Wird in diesem Zustand die Antriebseinheit 12 durch ein mit einem Fahrzeug in Kontakt tretendes Hindernis 22 nach hinten in Richtung auf den Fahrzeuginnenraum, beispielsweise die Stirnwand 24, zu bewegt, so folgt aufgrund der durch die Zerstörung der Abstützelemente 26 hervorgerufenen weitestgehenden Entkopplungen der Abgasanlage 18 von der Antriebseinheit 12 die Abgasanlage 18 der Bewegung der Antriebseinheit 12 nicht bzw. mit geringerer Intensität, so dass die Gefahr, dass die Abgasanlage 18 die Stirnwand 24 durchdringt, deutlich gemindert ist. Hierzu trägt auch bei, dass eine oder mehrere Abstützeinheiten 20, welche die Abgasanlage 18 in sich abstützen und somit versteifen, gleichermaßen zerstört werden, so dass die Stabilität der Abgasanlage 18 in sich ebenfalls abnimmt und bei Aufprall der Abgasanlage 18 auf die Stirnwand ein wesentlicher Teil der Energie auch dadurch abgeführt wird, dass die Abgasanlage 18 in sich verformt wird.

Neben der Ausgestaltung der für die Abstützeinheiten 20 vorgesehenen Abstützelemente 26 aus Leichtmetalldruckgussmaterial, kann auch die Formgebung der Abstützelemente 26 zu einer leichteren Zerstörbarkeit bei Schlagbelastung beitragen. So erkennt man, dass in dem eine erfindungsgemäße Ausgestaltung darstellenden Beispiel der Fig. 2a) das Abstützelement 26 mit spindelartiger, beispielsweise rotationssymmetrischer konkaver Ausgestaltung ausgebildet ist, so dass beispielsweise im Längenmittenbereich des Abstützelements 26 eine einen Sollbruchstellenbereich 40 bereitstellende maximale Durchmesserverringerung bzw. Einschnürung vorhanden ist. In den nicht erfindungsgemäßen Beispielen der Fig. 2b) und 2c) kann da Abstützelement 26 mit grundsätzlich beispielsweise zylinderartiger, vorzugsweise kreiszylinderartiger Ausgestaltung, ausgebildet sein. Es können am Außenumfangsbereich verschiedene Einkerbungen bzw. Vertiefungen 42 bzw. das Abstützelement 26 auch durchsetzende Öffnungen 44 vorgesehen sein, die zum Entstehen definierter Sollbruchstellenbereiche 40 beitragen. Somit kann durch die Auswahl des Aufbaumaterials einerseits und die Formgebung andererseits das Bruchverhalten eines erfindungsgemäß aufgebauten Abstützelements 26 definiert beeinflusst werden, so dass beispielsweise auch angepasst an den Einbauort bzw. die miteinander zu koppelnden Systembereiche in dem Antriebssystem 10 verschiedene Abstützelemente 26 bzw. Abstützeinheiten 20 zum Einsatz gelangen können.

Bei dem vorangehend beschriebenen erfindungsgemäßen Aufbau einer Abstützeinheit 20 bzw. eines damit aufgebauten Antriebssystems 10 können selbstverständlich in Verbindung mit einzelnen oder mehreren der vorangehend beschriebenen konstruktiven Ausgestaltungsmerkmale noch weitere Aspekte realisiert sein. So können die ersten und zweiten Anbindungselemente 28, 30 einer jeweiligen Abstützeinheit 20 selbstverständlich aus unterschiedlichen Materialien und angepasst an die daran anzubindenden Systembereiche mit unterschiedlicher Formgebung ausgebildet sein. Wie bereits ausgeführt, können die Anbindungselemente aus Stahlmaterial, beispielsweise Stahlblechmaterial, aufgebaut sein. Auch Aluminium kann als Aufbaumaterial eingesetzt werden. Um die Anbindungselemente 28, 30 auch gegen Korrosion bzw. Hitzebelastung zu schützen, können sie alternativ zu einer grundsätzlich unbeschichteten Ausgestaltung auch mit einer Beschichtung überzogen sein. Selbstverständlich können die Anbindungselemente 28, 30 aus einem Teil geformt sein oder können mehrteilig aufgebaut sein.

Um die Aufbauelemente einer erfindungsgemäßen Abstützeinheit 20 gegen übermäßige Temperaturbelastung zu schützen, können im Angrenzungsbereich derselben aneinander beispielsweise wärmeisolierende Elemente, wie Glimmerplättchen, Matten oder Platten aus wärmeisolierendem Material oder Faserverbundmaterial vorgesehen sein. Auch eine Ummantelung einzelner oder mehrerer der Aufbauelemente mit derartigem Material ist möglich. Zur Bereitstellung eines verbesserten Korrosionsschutzes können einzelne oder mehrere der Aufbauelemente einer erfindungsgemäßen Abstützeinheit 20 beispielsweise mit Teflon oder Kunststoffmaterial beschichtet sein. Auch eine Oberflächenbehandlung, beispielsweise Plasmabehandlung, Eloxieren, Galvanisieren, ist möglich. Grundsätzlich können die Aufbauelemente auch mit einer korrosionsschützenden Legierung überzogen werden. Auch die Zwischenlagerung von korrosionsschützenden Schichten, wie z.B. aus Glimmermaterial oder aus Gummimaterial, ist möglich.

Die insbesondere in den Fig. 2a) bis 2c) erkennbaren Formgebungen eines Abstützelements zur Bereitstellung eines definierten Bruchverhaltens können selbstverständlich einzeln oder in Kombination vorgesehen sein. Insbesondere können die Vertiefungen 42 bzw. die durchgehenden Öffnungen 44 symmetrisch oder unsymmetrisch am Abstützelement 26 vorgesehen sein. Das Abstützelement 26 kann eine grundsätzlich rotationssymmetrische, in Richtung einer Längsachse derselben langgestreckte Konfiguration aufweisen. Der Querschnitt kann beispielsweise kreisförmig, oval oder eckig ausgebildet sein. Dort, wo das Abstützelement 26 insbesondere auch zur Erfüllung seiner Abstützfunktionalität sehr stark belastet wird, können Materialaufdickungen vorgesehen sein. Dies ist beispielsweise in Fig. 2a) erkennbar, wo das Abstützelement 26 dort, wo es vermittels der Kopplungsorgane 34, 36 an die Anbindungselemente 28, 30 angekoppelt ist, mit größerer Materialstärke ausgebildet ist.

Auch für die Eingliederung einer die Abgasanlage 18 in sich stabilisierenden Abstützeinheit 20 bestehen verschiedene Möglichkeiten. So kann, wie dies in Fig. 1 erkennbar ist, eines der Anbindungselemente einer Abstützeinheit 20 unmittelbar an die Abgasanlage 18 angebunden sein, während das andere Anbindungselement an ein Anbindungselement einer weiteren Abstützeinheit 20 angebunden ist. Alternativ können beide Anbindungselemente einer derartigen Abstützeinheit 20 direkt an die Abgasanlage 18 angebunden sein.

## Patentansprüche

1. Abstützeinheit zur Abstützung einer Abgasanlage (18) eines Fahrzeugs, umfassend wenigstens ein mit Leichtmetalldruckgussmaterial aufgebautes Abstützelement (26), **dadurch gekennzeichnet, dass** wenigstens ein Abstützelement (26) wenigstens einen Sollbruchstellenbereich (40) aufweist, wobei das wenigstens eine Abstützelement (26) zum Bereitstellen einer Querschnittseinschnürung mit rotationssymmetrischer konkaver Ausgestaltung ausgebildet ist, so dass in einem Längenmittenbereich des wenigstens einen Abstützelements (26) eine einen Sollbruchstellenbereich (40) bereitstellende maximale Durchmesserverringerung vorhanden ist.

2. Abstützeinheit nach Anspruch 1, **dadurch gekennzeichnet, dass** das Leichtmetalldruckgussmaterial Al oder/und Mg enthält.

3. Abstützeinheit nach Anspruch 1 oder 2, **dadurch gekennzeichnet, dass** das Leichtmetalldruckgussmaterial Si oder/und Cu oder/und Zn enthält.

4. Abstützeinheit nach einem der Ansprüche 1-3 **dadurch gekennzeichnet, dass** das Leichtmetalldruckgussmaterial eine Al/Si-Legierung oder eine Al/Mg-Legierung oder eine Al/Si/Mg-Legierung oder eine Al/Si/Cu-Legierung ist.

5. Abstützeinheit nach einem der Ansprüche 1-4, **gekennzeichnet durch** ein zur festen Anbindung an einen ersten Systembereich (18) vorgesehenes und mit wenigstens einem Abstützelement (26) in einem ersten Kopplungsbereich (32) gekoppeltes oder zu koppelndes erstes Anbindungselement (28) und ein zur festen Anbindung an einen zweiten Systembereich (14, 16, 18) vorgesehenes und mit wenigstens einem Abstützelement (26) in einem zweiten Kopplungsbereich (36) gekoppeltes oder zu koppelndes zweites Anbindungselement (30).

6. Abstützeinheit nach Anspruch 5, **dadurch gekennzeichnet, dass** das erste Anbindungselement (28) mit dem Abstützelement (26) in dem ersten Kopplungsbereich (32) durch wenigstens ein Kopplungsorgan (34) gekoppelt oder koppelbar ist oder/und dass das zweite Anbindungselement (30) mit dem Abstützelement (26) in dem zweiten Kopplungsbereich (36) durch wenigstens ein Kopplungsorgan (38) gekoppelt oder koppelbar ist.

7. Abstützeinheit nach Anspruch 6, **dadurch gekennzeichnet, dass** wenigstens ein Kopplungsorgan (34, 38) einen Schraubbolzen umfasst.

8. Abstützeinheit nach einem der Ansprüche 1-7, **dadurch gekennzeichnet, dass** wenigstens ein Sollbruchstellenbereich (40) eine Vertiefung oder/und eine das Abstützelement (26) durchsetzende Öffnung umfasst.

9. Antriebssystem für ein Fahrzeug, umfassend eine Antriebseinheit (12) mit einer Brennkraftmaschine (14) und eine Verbrennungsabgase von der Brennkraftmaschine (14) weg führende Abgasanlage (18), ferner umfassend wenigstens eine Abstützeinheit (20) nach einem der vorangehenden Ansprüche.

10. Antriebssystem nach Anspruch 9, **dadurch gekennzeichnet, dass** wenigstens eine Abstützeinheit (20) zur Abstützung der Abgasanlage (18) bezüglich der Brennkraftmaschine (14) angeordnet ist, oder/und dass die Antriebseinheit (12) ein Getriebe (16) umfasst und wenigstens eine Abstützeinheit (20) zur Abstützung der Abgasanlage (18) bezüglich des Getriebes (16) angeordnet ist, oder/und dass wenigstens eine Abstützeinheit (20) zur Abstützung eines ersten Bereichs der Abgasanlage (18) bezüglich eines zweiten Bereichs der Abgasanlage (18) angeordnet ist.

## Claims

1. Support unit for supporting an exhaust gas system (18) of a vehicle, comprising at least one support element (26) constructed with a light metal die-cast material, **characterized in that** at least one support element (26) has at least one predetermined breaking point range (40), wherein the at least one support element (26) is formed with a rotation symmetric concave shape for providing a cross-sectional constriction, so that in a longitudinal central area of the at least one support element (26) there is a maximum reduction of diameter for providing a breaking point range (40).

2. Support unit in accordance with claim 1, **characterized in that** that the light metal die-cast material contains Al or/and Mg.

3. Support unit in accordance with claim 1 or 2, **characterized in that** the light metal die-cast material contains Si or/and Cu or/and Zn.

4. Support unit in accordance with one of the claims 1-3, **characterized in that** the light metal die-cast material is an Al/Si alloy or an Al/Mg alloy or an Al/Si/Mg alloy or an Al/Si/Cu alloy.

5. Support unit in accordance with one of the claims 1-4, **characterized by** a first connecting element (28) provided for rigid connection to a first system area (18) and coupled or to be coupled with at least one support element (26) in a first coupling area (32) and by a second connecting element (30) provided for rigid connection to a second system area (14, 16, 18) and coupled or to be coupled with at least one support element (26) in a second coupling area (36).

6. Support unit in accordance with claim 5, **characterized in that** the first connecting element (28) is coupled or can be coupled with the support element (26) in the first coupling area (32) by at least one coupling element (34) or/and that the second connecting element (30) is coupled or can be coupled with the support element (26) in the second coupling area (36) by at least one coupling element (38).

7. Support unit in accordance with claim 6, **characterized in that** at least one coupling element (34, 38) comprises a screw bolt.

8. Support unit in accordance with one of claims 1 to 7, **characterized in that** at least one predetermined breaking point range (40) comprises a recess or/and an opening traversing the support element (26).

9. Drive system for a vehicle, comprising a drive unit (12) with an internal combustion engine (14) and an exhaust system (18) guiding combustion waste gases away from the internal combustion engine (14), further comprising at least one support unit (20) in accordance with one of the above claims.

10. Drive system in accordance with claim 9, **characterized in that** at least one support unit (20) is arranged for supporting the exhaust system (18) in relation to the internal combustion engine (14), or/and that the drive unit (12) comprises a transmission (16) and at least one support unit (20) is arranged for supporting the exhaust system (18) in relation to the transmission (16), or/and that at least one support unit (20) is arranged for supporting a first area of the exhaust system (18) in relation to a second area of the exhaust system (18).

## Revendications

1. Unité de support pour supporter un système de gaz d'échappement (18) d'un véhicule, comprenant au moins un élément de support (26) construit avec du matériau de métal léger de coulage sous pression, **caractérisé en ce qu'**au moins un élément de support (26) comprend au moins une région de point de rupture (40), où ledit au moins un élément de support (26) est formé pour prévoir un rétrécissement de coupe transversale avec une forme concave à symétrie de révolution, de sorte que dans une région central longitudinal dudit au moins un élément de support (26) il y a une réduction maximale de diamètre pour mettre en place une région de point de rupture (40).

2. Unité de support selon la revendication 1, **caractérisée en ce que** le matériau de métal léger de coulage sous pression comprend du Al ou/et du Mg.

3. Unité de support selon la revendication 1 ou 2, **caractérisée en ce que** le matériau de métal léger de coulage sous pression comprend du Si ou/et du Cu ou/et du Zn.

4. Unité de support selon une des revendications 1-3, **caractérisée en ce que** le matériau de métal léger de coulage sous pression est un alliage Al/Si ou un alliage Al/Mg ou un alliage Al/Si/Mg ou un alliage Al/Si/Cu.

5. Unité de support selon une des revendications 1-4, **caractérisée par** un premier élément de raccordement (28) prévu pour un raccordement fixe à une première zone système (18) et couplé ou à coupler à au moins un élément de support (26) dans une première région de couplage (32) et un deuxième élément de raccordement (30) prévu pour un raccordement fixe à une deuxième zone système (14, 16, 18) et couplé ou à coupler à au moins un élément de support (26) dans au moins une deuxième région de couplage (36).

6. Unité de support selon la revendication 5, **caractérisée en ce que** le premier élément de raccordement (28) est couplé ou peut être couplé à l'élément de support (26) dans la première région de couplage (32) par au moins un membre de couplage (34) ou/et **en ce que** le deuxième élément de raccordement (30) est couplé ou peut être couplé à l'élément de support (26) dans la deuxième région de couplage (36) par au moins un membre de couplage (38).

7. Unité de support selon la revendication 6, **caractérisée en ce qu'**au moins un membre de couplage (34, 38) comprend un boulon fileté.

8. Unité de support selon une des revendications 1-7, **caractérisée en ce qu'**au moins une région de point de rupture (40) comprend une dépression ou/et une ouverture passant à travers l'élément de support (26).

9. Système d'entraînement pour un véhicule, comprenant une unité d'entraînement (12) avec un moteur à combustion interne (14) et un système d'échappement (18) éloignant les gaz d'échappement du moteur à combustion interne (14), comprenant en outre au moins une unité de support (20) selon une des revendications précédentes.

10. Système d'entraînement selon la revendication 9, **caractérisé en ce qu'**au moins une unité de support (20) est arrangée pour supporter le système d'échappement (18) en relation au moteur à combustion interne (14), ou/et **en ce que** l'unité d'entraînement (12) comprend une transmission (16) et **en ce qu'**au moins une unité de support (20) est arrangée pour supporter le système d'échappement (18) par rapport au moteur à combustion interne (14) ou/et **en ce qu'**au moins une unité de support (20) est arrangée pour supporter une première région du système d'échappement (18) en relation à une deuxième région du système d'échappement (18).
